# EUROPEAN PATENT SPECIFICATION

(11) **EP 2 573 411 B1**
(45) Date of publication and mention of the grant of the patent: **18.12.2013**
(21) Application number: 11182262.3
(22) Date of filing: 21.09.2011
(51) Int. Cl.: F16C 1/26

(54) **Tube for cable sheath and cable sheath using the same**
Rohr für Kabelhülle und Kabelhülle damit
Tuyau pour gaine de câble et gaine de câble l'utilisant

(43) Date of publication of application: 27.03.2013
(73) Proprietor: Wen, Yuan-Hung, Hemei Town Chang hua (TW)
(72) Inventor: Wen, Yuan-Hung, Hemei Town Chang hua (TW)
(74) Representative: Lang, Christian

(56) References cited:
- DE-U1- 8 132 004
- US-A- 6 042 155
- US-A1- 2006 179 966

## Description

### BACKGROUND OF THE INVENTION

### Field of the Invention

The present invention relates to a cable sheath which is used for a cable to be received therein.

### Description of the Prior Art

Cable sheaths are not only used for a brake cable or the like to be received therein, but protect the cable or users well.

Conventional cable sheath, as shown in US 338,310, includes a plurality of circular tubes which are respectively formed with a tenon on the tube wall. The tubes are connected to one another by the tenons, thereby the bending degree of the cable and the cable sheath are restricted. However, each tube has four tenons, when each tube is connected to one another, many bending directions of the cable sheath would be restricted. When the bending directions and the bending angles of the cable sheath are limited strictly, it would lose the original design purpose of the cable sheathprovide proper bending directions for the cable. Besides, the conventional cable sheath doesn't dispose any fixed structure so that each tube easily slides away from one another.

Another conventional cable sheath, as shown in US 5,933,557, are made of plural main tubes and plural joint tubes in combination. The bending directions of the tubes are restricted by fixed structures on the side of the tubes so that the sheath may bend in only one direction. However, the conventional cable sheath must be made of the main tubes and the joint tubes so as to accomplish the said function; moreover, the whole sheath can be restricted in only one bending direction. Besides, the fixed structures are difficultly dismantled and installed. As above, the conventional cable sheath is inconvenient and lack of variability.

Another conventional cable sheath made from a plurality of circular tubes is known from the document US A 6042155, however this assembly does not provide a limitation to the degree of bending nor means to securely join the tubular elements (10) to each others.

Furthermore, the current merchandises of cable sheaths in the market, including the said prior arts, have a problem in common -- the structure of the connecting point of each tube is fragile and easy to be damaged by force. The conventional cable sheaths don't have any structure can protect the connecting point from being damaged so as to cause their life to be shortened and substitute for a new one often. In other words, all prior arts can't provide a good stability of use.

In addition, when the brake cable is actually received in the cable sheath, in other to the brake cable may bend smoothly, some parts of the brake cable usually require larger space for bending, while the others don't have too many curves. However, the said prior arts don't enable the users to determine the bending sections of the cable sheath for the brake cable as needed.

### SUMMARY OF THE INVENTION

The main object of the present invention is to provide a tube for cable sheath which is used for the brake cable or the like to be received directly.

To achieve the above, the tube for cable sheath of the present invention includes a front end, a rear end, and two side plates. The tube is formed with a hollow cylinder, a hollow abutting section, and a receiving space from the front end to the rear end in turn. The side plates parallel with each other are protrusive from the abutting section along an extension direction of the front end. A clamping space is formed between each of the side plates and the cylinder which has a protrusive rim adjacent to an opening of the cylinder. The protrusive rim extends away from the cylinder radially. An inner diameter of the receiving space narrows down gradually toward the opening of the receiving space. A minimal inner diameter of the receiving space is defined in the opening. A maximal outer diameter of the protrusive rim is smaller than a maximal inner diameter of the receiving space. An outer diameter of the protrusive rim is larger than the minimal inner diameter of the receiving space. An outer diameter of the cylinder is smaller than the minimal inner diameter of the receiving space. The abutting section has two abutting surfaces which are parallel and corresponding to each other. The side plates are parallelly protrusive from the abutting surfaces along the extension direction of the front end. A distance between inner sides of the side plates is longer than a distance between the abutting surfaces. Thereby each of the side plates is connected to the relative abutting surface so as to form with a continuous surface which shapes in the form of steps. Two abutting portions are respectively formed between one of the side plates and one of the abutting surfaces. A distance from the end of the side plate to the abutting portion is shorter than a distance from the opening of the receiving space to the abutting portion.

Thereby the clamping spaces of the side plates of the tube are adapted for an outside of the abutting section of another tube being clutched therein. The cylinder of the tube is received into the receiving space of another tube revolvingly. Each tube is connected to another one in turn so as to define a hollow column therein.

As such, the hollow column is adapted for the cable to be received therein. The column is restricted its bending direction by the side plates and the abutting sections which are connected to each other so that the column may bend in only one direction along an extension direction of the abutting surfaces. In other words, there is only one larger bending space for the column in a vertical direction of the extension direction of the abutting surfaces so that the column may avoid the cable being bended in all directions randomly. It is important that the side plates protect the fragile connecting point of the tube so that it might not be damaged by external force, and the side plates and the abutting surfaces can pile together to enhance the structural intensity of the tube.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of the present invention;
Fig. 2 is a stereogram showing a single tube of the present invention;
Fig. 3 is a side perspective view showing a single tube of the present invention;
Fig. 4 is a side perspective view of the present invention;
Fig. 5 is a stereogram in accordance with the second embodiment of the present invention.

### DETAILED DESCRIPTION OF THE PREFERRED EMBODIMENTS

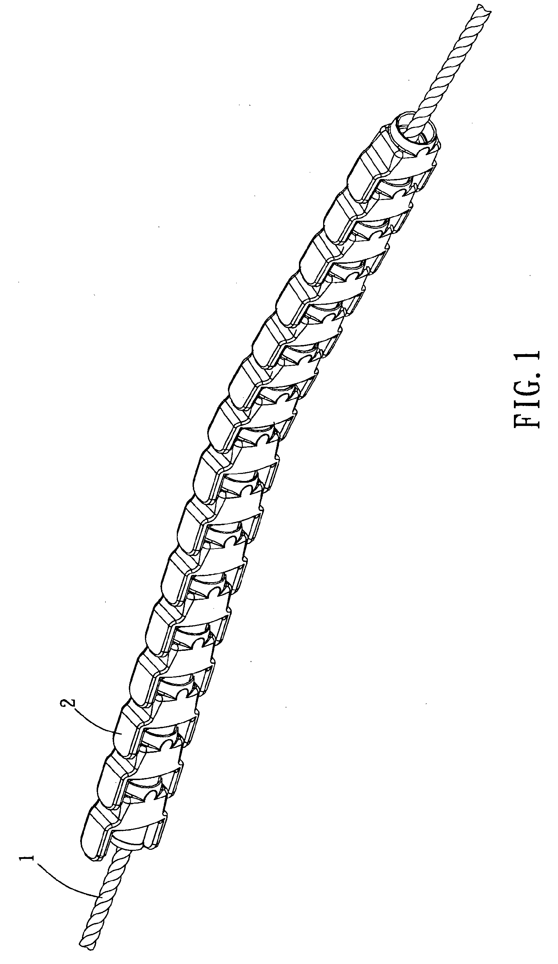

Please refer to the Fig. 1, the cable sheath of the present invention comprises plural tubes 2 which are connected to one another in turn. A cable 1 is received in the cable sheath. Each tube 2 has a front end, a rear end, and two side plates 24.

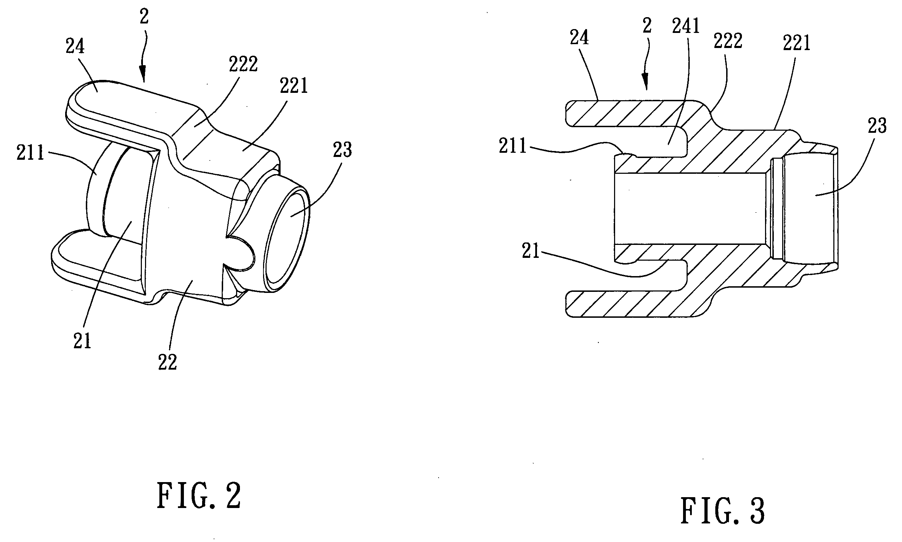

Please refer to Fig. 2 and Fig. 3, each tube is formed with a hollow cylinder 21 and a hollow abutting section 22 from the front end to the rear end in turn. The rear end is formed with a receiving space 23. The receiving space 23 has an opening. The side plates 24 parallel with each other are protrusive from the abutting section 22 along an extension direction of the front end. The cylinder 21 has a protrusive rim 211 adjacent to an opening of the cylinder 21. The protrusive rim 211 extends away from the cylinder 21 radially. An inner diameter of the receiving space 23 narrows down gradually toward the opening of the receiving space 23. A minimal inner diameter of the receiving space 23 is defined in the opening. A maximal outer diameter of the protrusive rim 211 is smaller than a maximal inner diameter of the receiving space 23. An outer diameter of the protrusive rim 211 is larger than the minimal inner diameter of the receiving space 23. An outer diameter of the cylinder 21 is smaller than the minimal inner diameter of the receiving space 23. Thereby, when the tubes are connected to one another, they can be fixed together and be separated difficulty, they still have enough space for rotation and keeping the possibility of bending. In another embodiment, the inner diameter of the receiving space 23 doesn't narrow down gradually toward the opening of the receiving space 23. The receiving space 23 has an engaging rim near the opening of the receiving space 23. The outer diameter of the cylinder 21 is smaller than the inner diameter of the engaging rim so that the tubes 2 may be connected to one another. The abutting section 22 has two abutting surfaces 221 which are parallel and corresponding to each other. The side plates 24 are parallelly protrusive from the abutting surfaces 221 integrally along the extension direction of the front end. The side plates 24 are parallel with the abutting surfaces 221. A clamping space 241 is formed between each of the side plates 24 and the cylinder 21. A distance between inner sides of the side plates 24 is longer than a distance between the abutting surfaces 221. Thereby, each of the side plates 24 is connected to the relative abutting surface 221 so as to form with a continuous surface which shapes in the form of steps. Two abutting portions 222 are respectively formed between one of the side plates 24 and one of the abutting surfaces 221. A distance from the end of the side plate 24 to the abutting portion 222 is shorter than a distance from the opening of the receiving space 23 to the abutting portion 222 so as to remain some space to be adapted for each tube revolving. Wherein, in another embodiment, the side plates 24 are non-parallel, but still symmetrical so that the tubes 2 may be connected to another one. For instance, the distance between the side plates 24 toward the front end broadens gradually so that the side plates 24 are radial, and the distance between the abutting surfaces toward the rear end narrows down gradually so that the shape of the abutting section may still correspond to the shape of the side plates. Besides, the side plates can also be fixed on the outer surface of another tube with different manners, such as an encasing means or other installation means.

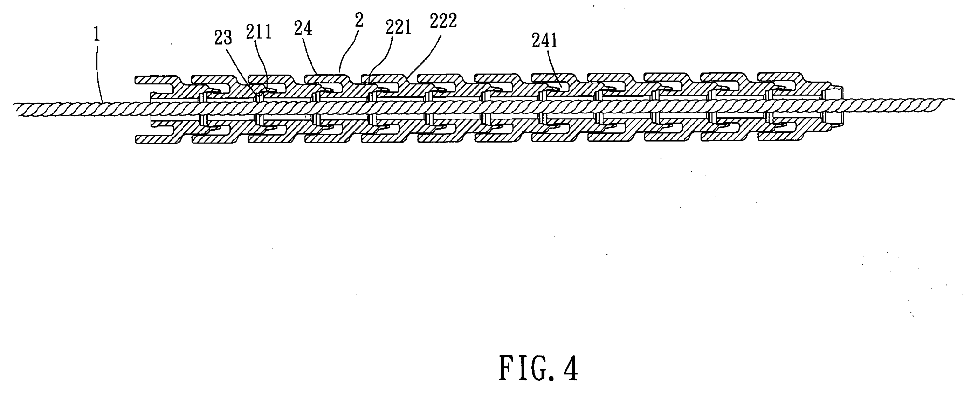

When the tubes are in the process of installing, as shown in Fig. 4, the front end of a first tube is connected to the rear end of a second tube, the clamping space 241 of the side plates 24 of the first tube are adapted for the abutting surfaces 221 of the second tube are clutched therein, and the cylinder 21 of the first tube is received into the receiving space 23 of the second tube inclinedly. The tubes can be connected to one another with the said manner in turn so as to define a hollow column-formed cable sheath which can be bended partially. Whereby the present invention is used for the cable 1 being received therein and achieves preferably bending-limited effect. When the brake cable is received into the cable sheath, the cable sheath and the brake cable can be bended upward in a particular direction only, thereby reducing the inconvenience of use, and be installed and dismantled easily. The present invention is quite useful.

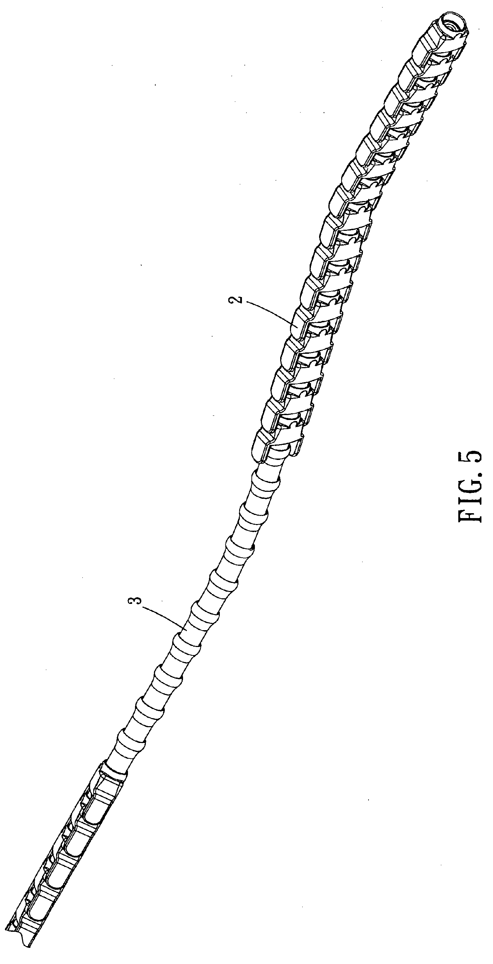

In a second embodiment, as shown in Fig. 5, the cable sheath can also comprise several kinds of tubes. More specifically speaking, as long as the tubes which are hollow have the same size of the cylinder 21 and the receiving space 23, they could be connected to the tube 2 of the present invention. For instance, the cable sheath comprises plural non-side plate tubes 3 and the tubes 2. The non-side plate tubes 3 are connected to the tubes 2 so that the cable sheath may have lots of different sections which provide different effects for restricting its bending degree. Moreover, because the present invention is easy to be installed and dismantled, the non-side plate tubes 3 are disposed in some sections which have many curves, and the tubes 2 are disposed in some sections which don't have too many curves. As result in, the present invention can be adjusted as the users needed.

The said cable is covered by an outer plastic cap; however, in other possible embodiments of the present invention, the cable sheath of the present invention further comprises a plurality of inner plastic caps corresponding to the inner cavity of the tubes 2. For example, each tube 2 has several portions which are different between their inner diameter. The inner diameter of some portions of each tube 2 near the front end is smaller, the inner diameter of other portions of each tube 2 near the rear end is larger, a step-formed abutting zone is formed between the different inner diameter portions of each tube 2 so that the inner plastic cap can be received therein from the end of each tube 2. In other words, the present invention is adapted for the cable which isn't covered by the outer plastic cap being received therein; thereby the present invention has a good variability of use.

It is important that the side plates make the connecting point hidden completely so that the side plates can protect the connecting point well. When the sheath is bended, one side of the side plates is most fragile, the side plates just provide the best protection for the connecting point.

According to description mentioned above, the present invention can achieve the below:
Firstly, the present invention is used for the users preferably controlling the bending direction of the cable sheath and the cable, such as the brake cable, in the more ideal positions, thereby, the present invention is quite useful.
Secondly, the side plates protect the connecting point which is more fragile from being damaged and enhance the structure intensity of the cable sheath.
Thirdly, the present invention has convenience and variability of use and sale in business. After standardizing the specification of the present invention, it can be connected to many kinds of products. The different sections of the cable sheath is used for disposing different products as needed so that the present invention can achieve the best efficacy.

## Claims

1. A tube (2) for cable sheath having a front end, a rear end, and two side plates (24), the tube (2) being formed with a hollow cylinder (21) and a hollow abutting section (22) from the front end to the rear end in turn, the rear end being formed with a receiving space (23), the receiving space (23) having an opening, the side plates (24) being protrusive from the abutting section (22) along an extension direction of the front end, a clamping space (241) being formed between each of the side plates (24) and the cylinder (21);
wherein the clamping spaces (241) of the side plates (24) of the tube (2) are adapted for an outside of the abutting section (22) of another tube (2) being clutched therein, the cylinder (21) of the tube (2) is received into the receiving space (23) of another tube (2) revolvingly.

2. The tube for cable sheath of claim 1, the cylinder (21) having a protrusive rim (211) adjacent to an opening of the cylinder (21), the protrusive rim (211) extending away from the cylinder (21) radially, an inner diameter of the receiving space (23) narrowing down gradually toward the opening of the receiving space (23), a minimal inner diameter of the receiving space (23) being defined in the opening, a maximal outer diameter of the protrusive rim (211) being smaller than a maximal inner diameter of the receiving space (23), an outer diameter of the protrusive rim (211) being larger than the minimal inner diameter of the receiving space (23), an outer diameter of the cylinder (21) being smaller than the minimal inner diameter of the receiving space (23).

3. The tube for cable sheath of claim 1, the abutting section (22) having two abutting surfaces (221), the abutting surfaces (221) being parallel and corresponding to each other, the side plates (24) being parallelly protrusive from the abutting surfaces (221) along the extension direction of the front end, the side plates (24) being parallel with the abutting surfaces (221).

4. The tube for cable sheath of claim 3, a distance between inner sides of the side plates (24) being longer than a distance between the abutting surfaces (221), thereby each of the side plates (24) is connected to the relative abutting surface (221) so as to form with a continuous surface which shapes in the form of steps, two abutting portions (222) are respectively formed between one of the side plates (24) and one of the abutting surfaces (221).

5. The tube for cable sheath of claim 4, a distance from the end of the side plate (24) to the abutting portion (222) being shorter than a distance from the opening of the receiving space (23) to the abutting portion (222).

6. A cable sheath, comprising plural tubes for cable sheath of claim 1, the front end of each tube (2) being connected to the rear end of another one so as to define a hollow column therein.

## Patentansprüche

1. Rohr (2) für eine Kabelhülse, das ein vorderes Ende, ein hinteres Ende und zwei Seitenplatten (24) aufweist, wobei das Rohr (2) vom vorderen Ende zum hinteren Ende der Reihe nach mit einem hohlen Zylinder (21) und einem hohlen Anschlagsbereich (22) ausgebildet ist, wobei das hintere Ende mit einem Aufnahmeraum (23) ausgebildet ist, wobei der Aufnahmeraum (23) eine Öffnung aufweist, wobei die Seitenplatten (24) von dem Anschlagsbereich (22) aus entlang einer Erstreckungsrichtung des vorderen Endes hervorstehen, wobei ein Klemmraum (241) zwischen jeder der Seitenplatten (24) und dem Zylinder (21) ausgebildet ist,
wobei die Klemmräume (241) der Seitenplatten (24) des Rohrs (2) für eine Außenseite des Anschlagsbereichs (22) eines anderen Rohrs (2) ausgelegt sind, das darin gekuppelt wird, wobei der Zylinder (21) des Rohrs (2) drehbar in dem Aufnahmeraum (23) des anderen Rohrs (2) aufgenommen ist.

2. Rohr für eine Kabelhülse nach Anspruch 1, wobei der Zylinder (21) einen vorstehenden Rand (211) benachbart zu einer Öffnung des Zylinders (21) aufweist, wobei der vorstehende Rand (211) sich radial von dem Zylinder (21) weg erstreckt, wobei ein innerer Durchmesser des Aufnahmeraums (23) sich allmählich zu der Öffnung des Aufnahmeraums (23) hin verengt, wobei ein minimaler innerer Durchmesser des Aufnahmeraums (23) an der Öffnung vorgesehen ist, wobei eine maximaler äußere Durchmesser des vorstehenden Rands (211) kleiner ist als der maximale innere Durchmesser des Aufnahmeraums (23), wobei ein äußerer Durchmesser des vorstehenden Rands (211) größer ist als der minimale innere Durchmesser des Aufnahmeraums (23), wobei ein äußerer Durchmesser des Zylinders (21) kleiner ist als der minimale innere Durchmesser des Aufnahmeraums (23).

3. Rohr für eine Kabelhülse nach Anspruch 1, wobei der Anschlagsbereich (22) zwei Anschlagsflächen (221) aufweist, wobei die Anschlagsflächen (221) parallel zueinander sind und einander entsprechen, wobei die Seitenplatten (24) parallel von den Anschlagsflächen (221) entlang der Erstreckungsrichtung des vorderen Endes hervorstehend sind, und wobei die Seitenplatten (24) parallel zu den Anschlagsflächen (221) sind.

4. Rohr für eine Kabelhülse nach Anspruch 3, wobei ein Abstand zwischen den inneren Seiten der Seitenplatten (24) länger ist als eine Distanz zwischen den Anschlagsflächen (221), wodurch jede der Seitenplatten (24) mit der entsprechenden Anschlagsfläche (22) verbunden ist, um mit einer kontinuierlichen Oberfläche ausgebildet zu sein, die die Form von Stufen aufweist, wobei zwei Anschlagsabschnitte (222) jeweils zwischen einer der Seitenplatten (24) und einem der Anschlagsflächen (221) ausgebildet sind.

5. Rohr für eine Kabelhülse nach Anspruch 4, wobei ein Abstand von dem Ende der Seitenplatte (24) zu dem Anschlagsabschnitt (222) kürzer ist als ein Abstand von der Öffnung des Aufnahmeraums (23) zu dem Anschlagsabschnitt (222).

6. Kabelhülse, die mehrere Rohre für eine Kabelhülse nach Anspruch 1 umfasst, wobei das vordere Ende von jedem Rohr (2) mit dem hinteren Ende eines anderen verbunden ist, um dadurch eine hohle Säule auszubilden.

## Revendications

1. Tube (2) pour gaine de câble ayant une extrémité frontale, une extrémité arrière et deux plaques de côté (24), le tube (2) étant formé avec un cylindre creux (21) et une section d'about creuse (22) successivement de l'extrémité frontale à l'extrémité arrière, l'extrémité arrière étant formée avec un espace de réception (23), l'espace de réception (23) ayant une ouverture, les plaques de côté (24) étant en saillie à partir de la section d'about 22) le long d'un sens d'extension de l'extrémité frontale, un espace de serrage (241) étant formé entre chacune des plaques de côté (24) et le cylindre (21)
dans lequel les espaces de serrage (241) des plaques de côté (24) du tube (2) sont adaptées pour un côté extérieur de la section d'about (22) d'un autre tube (2) qui y est coïncé, le cylindre (21) du tube (2) est reçu dans l'espace de réception (23) d'un autre tube (2) de manière à pouvoir tourner.

2. Tube (2) pour gaine de câble selon la revendication 1, le cylindre (21) ayant un bord en saillie (211) adjacent à une ouverture du cylindre (21), le bord en saillie (211) s'étendant en s'éloignant du cylindre (21) dans le sens radial, un diamètre intérieur de l'espace de réception (23) devenant étroit graduellement vers le bas vers l'ouverture de l'espace de réception (23), un diamètre intérieur minimal de l'espace de réception (23) étant défini dans l'ouverture, un diamètre extérieur maximal de l'espace de réception (23) étant défini dans l'ouverture, un diamètre extérieur maximal du bord en saillie (211) étant plus petit qu'un diamètre intérieur maximal de l'espace de réception (23), un diamètre extérieur du bord en saillie (211) étant plus grand que le diamètre intérieur minimal de l'espace de réception (23), un diamètre extérieur du cylindre (21) étant plus petit que le diamètre intérieur minimal de l'espace de réception (23).

3. Tube (2) pour gaine de câble selon la revendication 1, la section d'about (22) ayant deux surfaces d'about (221), les surfaces d'about (221) étant parallèles et correspondant l'une à l'autre, les plaques de côté (24) étant parallèlement en saillie à partir des sections d'about (221) le long du sens d'extension de l'extrémité frontale, les plaques de côté (24) étant parallèles aux surfaces d'about (221).

4. Tube (2) pour gaine de câble selon la revendication 3, une distance entre les côtés intérieurs des plaques de côté (24) étant plus longue qu'une distance entre les surfaces d'about (221), chacune des plaques de côté (24) étant ainsi reliée à la surface d'about relative (221) de manière à former une surface continue avec des formes en forme de degrés, deux portions d'about (222) étant respectivement formées entre l'une des plaques de côté (24) et l'une des surfaces d'about (221).

5. Tube (2) pour gaine de câble selon la revendication 4, une distance de l'extrémité de la plaque de côté (24) vers la section d'about (222) étant plus courte qu'une distance de l'ouverture de l'espace de réception (23) vers la portion d'about (222).

6. Gaine de câble comprenant plusieurs tubes pour gaine de câble selon la revendication 1, l'extrémité frontale de chaque tube (2) étant reliée à l'extrémité arrière d'un autre de manière à définir une colonne creuse à l'intérieur.
